(19) Europäisches Patentamt
European Patent Office
Office européen des brevets

(11) **EP 4 760 443 A1**

(12) **EUROPEAN PATENT APPLICATION**
published in accordance with Art. 153(4) EPC

(43) Date of publication:
**17.06.2026 Bulletin 2026/25**

(21) Application number: **24927630.4**

(22) Date of filing: **29.11.2024**

(51) International Patent Classification (IPC):
*G05D 16/20* (2006.01)    *F16K 17/32* (2006.01)
*F03B 11/00* (2006.01)    *F03B 13/00* (2006.01)
*F03B 15/06* (2006.01)

(52) Cooperative Patent Classification (CPC):
**G05D 16/2095; F03B 11/004; F03B 13/00;
F03B 15/06;** Y02E 10/20

(86) International application number:
**PCT/CN2024/135735**

(87) International publication number:
**WO 2026/081310 (23.04.2026 Gazette 2026/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.10.2024 CN 202411431283**

(71) Applicants:
• **Zhuzhou Southern Valve Co., Ltd**
  **Zhuzhou, Hunan 412000 (CN)**
• **Oriental Water Valley Carbon Technology Co.,
  Ltd.**
  **Zhuzhou, Hunan 412000 (CN)**

(72) Inventors:
• **OU, Litao**
  **Zhuzhou, Hunan 41200 (CN)**

• **HUANG, Jing**
  **Zhuzhou, Hunan 41200 (CN)**
• **FAN, Sixiong**
  **Zhuzhou, Hunan 41200 (CN)**
• **ZHANG, Hong**
  **Zhuzhou, Hunan 41200 (CN)**
• **GUI, Xinchun**
  **Zhuzhou, Hunan 41200 (CN)**
• **QI, Hao**
  **Zhuzhou, Hunan 41200 (CN)**
• **TANG, Bin**
  **Zhuzhou, Hunan 41200 (CN)**

(74) Representative: **Petraz, Gilberto Luigi et al
GLP S.r.l.
Viale Europa Unita, 171
33100 Udine (IT)**

(54) **SELF-POWER-GENERATING DIGITAL PRESSURE REDUCING VALVE AND PRESSURE REGULATION METHOD**

(57)    The present disclosure relates to a self-powered digital pressure reducing valve, which includes a main valve, and further includes an electric pressure reducing pilot valve, where a water inlet of the electric pressure reducing pilot valve is connected to a water inlet end of the main valve via a first pipeline, a water outlet end of the main valve is connected to a water outlet of the electric pressure reducing pilot valve via a second pipeline, the water outlet of the electric pressure reducing pilot valve is connected to an upper diaphragm cavity in a control chamber of the main valve via a third pipeline, a lower diaphragm cavity is connected to the outside via a fourth pipeline, a fifth pipeline is further connected between the water inlet end and the water outlet end of the main valve, and a hydroelectric generator is arranged on the fifth pipeline; and pressure detection apparatuses arranged before and after the main valve, and a controller that receives detection signals from the pressure detection apparatuses to control opening and closing of the electric pressure reducing pilot valve, where the hydroelectric generator is connected to the pressure detection apparatuses and the electric pressure reducing pilot valve. This digital pressure reducing valve can achieve self-power generation to meet power requirements of an electric device, and can achieve remote adjustment and control.

FIG. 1

**Description**

## TECHNICAL FIELD

The present disclosure relates to the technical field of valves, and more specifically, to a self-powered digital pressure reducing valve and a pressure adjustment method.

## BACKGROUND

In the industry, the combination of a pressure reducing valve and an electric pressure reducing pilot valve is often used to adjust and control the downstream pressure of a water pipeline. The electric pressure reducing pilot valve is a power-consuming instrument. In remote outdoor areas, the inconvenience of power supply often prevents the electric pressure reducing pilot valve from functioning properly, ultimately affecting remote adjustment and control of pipeline pressure. When the electric pressure reducing pilot valve is manually adjusted on site, the labor cost is high, and the waiting time is long.

In the prior art CN200520050625.5, a fully automatically adjustable pressure reducing valve is disclosed, which is formed by sequentially connecting a valve cover, a diaphragm seat, and a valve body, where a control cavity is formed between the valve cover and the diaphragm seat, an inner cavity is formed between the valve body and the diaphragm seat, a valve stem penetrating through the inner cavity and the control cavity is mounted in the inner cavity, a valve plate that controls opening and closing of an opening and closing port is arranged at a lower end of the valve stem, a diaphragm that divides the control cavity into an upper control cavity and a lower control cavity is arranged at an upper end of the valve stem and is sandwiched and fixed between diaphragm pressure plates, a valve inlet and a valve outlet which communicate with an internal cavity of the valve body are formed in the valve body, and a first exhaust valve is mounted at the top of the valve cover; a second exhaust valve is mounted beside the diaphragm seat; and the valve inlet and the valve outlet are respectively connected via connecting pipes to a programmatically automatically adjustable pilot valve, and a motor is connected to a top end of the programmatically automatically adjustable pilot valve and is connected to a controller.

Although the fully automatically adjustable pressure reducing valve is disclosed in the prior art, self-power generation is not disclosed to meet power requirements of the electric pressure reducing pilot valve. Therefore, the prior art still cannot solve the problem of the self-power generation to meet the power requirements of the electric pressure reducing pilot valve.

## SUMMARY

To overcome the above defects, the present disclosure provides a self-powered digital pressure reducing valve, so as to meet power requirements of an electric pressure reducing pilot valve.

To solve the above technical problems, the technical solution of the present disclosure is as follows:

A self-powered digital pressure reducing valve is provided, which includes a main valve and further includes an electric pressure reducing pilot valve, where a water inlet of the electric pressure reducing pilot valve is connected to a water inlet end of the main valve via a first pipeline, a water outlet end of the main valve is connected to a water outlet of the electric pressure reducing pilot valve via a second pipeline, the water outlet of the electric pressure reducing pilot valve is connected to an upper diaphragm cavity in a control chamber of the main valve via a third pipeline, a lower diaphragm cavity is connected to the outside via a fourth pipeline, a fifth pipeline is further connected between the water inlet end and the water outlet end of the main valve, and a hydroelectric generator is arranged on the fifth pipeline; and pressure detection apparatuses arranged before and after the main valve, and a controller that receives detection signals from the pressure detection apparatuses to control opening and closing of the electric pressure reducing pilot valve, where the hydroelectric generator is connected to the pressure detection apparatuses and the electric pressure reducing pilot valve.

Preferably, a filter is arranged on each of the first pipeline and the fifth pipeline.

Preferably, a ball valve is arranged on each of the first pipeline and the second pipeline, and a gate valve is arranged on the fifth pipeline.

Preferably, an electric valve and an automatic exhaust valve are arranged on the fourth pipeline.

Preferably, the controller is in communication connection with a mobile phone APP.

Preferably, the controller is in communication connection with a PC operation terminal.

Preferably, circular water inlet holes and a V-shaped groove water inlet are formed in a flow regulating sleeve of a valve plate assembly of the main valve.

Preferably, the hydroelectric generator includes an impeller chamber formed in a pipeline and a generator set arranged on one side of the impeller chamber, where the generator set includes a housing, and a stator and a rotor arranged in the housing, the rotor includes an impeller and a rotating shaft arranged in a center of the impeller, a permanent magnet is arranged at one end of the impeller, blades are arranged at the other end of the impeller, the end provided with the permanent magnet corresponds to the stator, the end provided with the blades is arranged in the impeller chamber, and the blades rotate in the impeller chamber to drive the rotor to rotate; the impeller chamber is connected to a water inlet and a water outlet of the pipeline, and an inner wall of the impeller chamber includes two concentric arcs with different radii and a connecting arc that connects the two concentric arcs; and a cavity that accommodates a water flow is formed between the inner wall with a large-radius arc of the impeller chamber and the blades.

A pressure adjustment method for rapidly adjusting a pressure of the self-powered digital pressure reducing valve is disclosed. The method specifically includes the following steps:

S1: pre-acquiring a downstream pressure value of the main valve corresponding to a valve opening position of the electric pressure reducing pilot valve to fit a multi-order curve function between the opening position of the electric pressure reducing pilot valve and a downstream pressure of the main valve;

S2: based on the downstream pressure of the main valve actually to be controlled, inversely calculating a valve opening of the electric pressure reducing pilot valve through the multi-order curve function; and

S3: controlling the electric pressure reducing pilot valve by the controller to be adjusted to a corresponding valve opening.

Preferably, in the step S2, a calculation method for the multi-order curve function is as follows:

$$y(x, W) = w_0 + w_1 x + \cdots + w_m x^m = \sum_{i-0}^{m} w_i x^i$$

$$W = \begin{bmatrix} w_0 \\ w_1 \\ \vdots \\ w_m \end{bmatrix}, \quad X = \begin{bmatrix} 1 & x_1 & \cdots & x_1^m \\ 1 & x_2 & \cdots & x_2^m \\ \vdots & \vdots & \ddots & \vdots \\ 1 & x_n & \cdots & x_n^m \end{bmatrix}$$

where X is the downstream pressure, and $x_1$ - $x_1^m$ are measured downstream pressure values; W refers to all weight values obtained by testing, $w_0$-$w_m$ are weights, and $\sum_{i-0}^{m} w_i x^i$ is the opening position of the electric pressure reducing pilot valve.

Preferably, the step S2 further includes: generating a coordinate graph with the valve opening position of the electric pressure reducing pilot valve as an abscissa and the downstream pressure of the main valve as an ordinate based on the pre-acquired downstream pressure value of the main valve corresponding to the valve opening position of the electric pressure reducing pilot valve in the step S1.

Compared with the prior art, the beneficial effects of the present disclosure are as follows.

1. The pressures of the pipelines are acquired, the acquired pressures are compared by the controller to control the opening or closing of the electric pressure reducing pilot valve, and finally the downstream pressures of the pipelines are adjusted to reach the expected values, where the downstream pressures of the pipelines can be automatically adjusted in multiple time periods to reach the expected values. The entire pressure adjustment process requires no manual operation, and the downstream pressure value of the pipeline can be directly monitored by the controller, thereby achieving digital monitoring. Moreover, the hydroelectric generator converts kinetic energy of the water flow into electrical energy to meet power requirements of the electric pressure reducing pilot valve, the pressure detection apparatuses, and the controller, without the need for an external power supply.

2. The filters are provided, so that the waterproof rating of the electric pressure reducing pilot valve is improved to IP68.

3. The controller is connected to the mobile phone APP, enabling remote adjustment, control and monitoring by the mobile phone APP.

4. The flow regulating sleeve on the valve plate assembly is provided with the circular water inlet holes and the V-shaped groove water inlet, which achieves strong cavitation resistance and can eliminate water hammer and reduce noise.

## BRIEF DESCRIPTION OF DRAWINGS

FIG. 1 is a principle diagram of a self-powered digital pressure reducing valve according to the present disclosure;
FIG. 2 is a sectional view of a hydroelectric generator in a self-powered digital pressure reducing valve according to the present disclosure;
FIG. 3 is a schematic structural diagram of a valve plate assembly in a self-powered digital pressure reducing valve according to the present disclosure; and
FIG. 4 is a schematic flowchart of a pressure adjustment method for a self-powered digital pressure reducing valve according to the present disclosure.

## DETAILED DESCRIPTION OF EMBODIMENTS

To more clearly illustrate the technical characteristics of the present solution, the present disclosure will be described in detail below with reference to the specific embodiments and the accompanying drawings.

In the following description, many specific details are set forth to facilitate a full understanding of the present application. However, the present application can also be implemented in ways other than those described herein, and therefore, the scope of protection of the present application is not limited to the specific embodiments disclosed below.

In addition, in the description of the present application, it should be understood that the terms "center", "upper", "lower", "front", "rear", "left", "right", "vertical", "horizontal", "top", "bottom", "inner", "outer", "axial", "radial", "circumferential", and the like indicate orientation or positional relationships based on the orientation or positional relationships shown in the drawings, only for the convenience of describing the present application and simplifying the description rather than indicating or implying that the apparatus or element referred to must have a particular orientation or be constructed and operated in a particular orientation, and therefore cannot be construed as limitations to the present application. In addition, the terms "first" and "second" are only for descriptive purposes, and cannot be construed as indicating or implying relative importance or implying the number of technical features indicated. Thus, features defined with "first" and "second" may explicitly or implicitly include one or more of the features. In the description of the present application, "a plurality of" means two or more, unless otherwise expressly and specifically defined.

In the present application, the terms such as "mount", "connected", "connection", and "fix" should be understood in a broad sense, unless otherwise expressly specified and limited. For example, it may be a fixed connection, a detachable connection, or being integrated; it may be a mechanical connection, an electrical connection, or a communication; and it may be being directly connected, being indirectly connected via an intermediate medium, a communication between the interiors of two elements, or an interaction between two elements. Those of ordinary skill in the art can understand specific meanings of the above terms in this application according to specific circumstances.

In the present application, a first feature being "over" or "under" a second feature may refer to that the first and second features are in direct contact with each other, or the first and second features are in indirect contact with each other via an intermediate medium, unless otherwise expressly specified and limited. In the description of this specification, the description with reference to the terms "one embodiment", "some embodiments", "an example", "a specific example", or "some examples" refers to that the specific features, structures, materials, or characteristics described in combination with the embodiment or example are included in at least one embodiment or example of the present application. In this specification, schematic representations of the above terms need not be directed to the same embodiments or examples. Moreover, the specific features, structures, materials or characteristics described may be combined in a suitable manner in any one or more embodiments or examples.

Embodiment 1

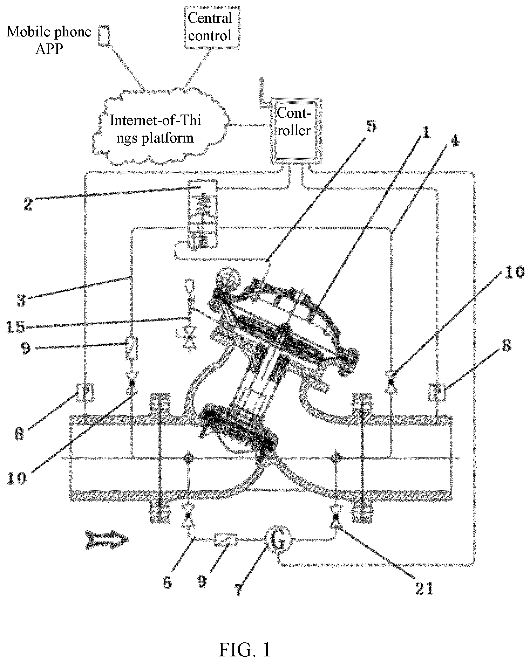

As shown in FIG. 1, the arrow in the figure represents the flow direction of a medium. A self-powered digital pressure reducing valve is disclosed, which includes a main valve 1, and further includes an electric pressure reducing pilot valve 2, where a water inlet of the electric pressure reducing pilot valve 2 is connected to a water inlet end of the main valve 1 via a first pipeline 3, a water outlet end of the main valve 1 is connected to a water outlet of the electric pressure reducing pilot valve 2 via a second pipeline 4, the water outlet of the electric pressure reducing pilot valve 2 is connected to an upper diaphragm cavity in a control chamber of the main valve 1 via a third pipeline 5, a lower diaphragm cavity is connected to the outside via a fourth pipeline 15, a fifth pipeline 6 is further connected between the water inlet end and the water outlet end of the main valve 1, and a hydroelectric generator 7 is arranged on the fifth pipeline 6; and self-powered digital pressure reducing valve further includes pressure detection apparatuses 8 arranged before and after the main valve 1, and a controller that receives detection signals from the pressure detection apparatuses 8 to control opening and closing of the electric pressure reducing pilot valve 2, where the hydroelectric generator 7 is connected to the pressure detection apparatuses 8 and the electric pressure reducing pilot valve 2.

In this embodiment, the main valve 1 is a valve body of the pressure reducing valve, the water inlet of the electric pressure reducing pilot valve 2 is connected to the water inlet end of the main valve 1 via the first pipeline 3, the water outlet end of the main valve 1 is connected to the water outlet of the electric pressure reducing pilot valve 2 via the second pipeline 4, the water outlet of the electric pressure reducing pilot valve 2 is connected to the upper diaphragm cavity in the control chamber of the main valve 1 via the third pipeline 5, and the lower diaphragm cavity is connected to the outside via the fourth pipeline 15, such as being connected to a water outlet pipeline of the main valve 1. Through the above design, the pressure reducing valve and the electric pressure reducing pilot valve 2 are combined together. Meanwhile, the fifth pipeline 6 is further connected between the water inlet end and the water outlet end of the main valve 1, and the hydroelectric generator 7 is arranged on the fifth pipeline 6. The hydroelectric generator 7 converts kinetic energy of the water flow into electrical energy, so as to achieve self-power generation. The pressure detection apparatuses 8 are arranged on pipelines before and after the main valve 1 respectively, and flow detection apparatuses may also be arranged on pipelines before and after the main valve. The pressure detection apparatuses 8 may specifically be pressure transmitters. The controller receives pressure data detected by the pressure transmitters to remotely control the opening and closing of the electric pressure reducing pilot valve 2, so as to automatically adjust the downstream pressure of the main valve 1. The electric pressure reducing pilot valve 2 is controlled electrically, and an electric valve is controlled electrically. Therefore, the hydroelectric generator 7 is connected to the pressure detection apparatuses 8, the flow detection apparatuses, the controller, the electric valve, and the electric pressure reducing pilot valve 2 to provide the electrical energy to the transmitters, the electric pressure reducing pilot valve 2, the controller, and the electric valve, thereby enabling this digital pressure reducing valve to be used in remote areas where an external power supply cannot be connected. In this embodiment, the pressures of the pipelines are acquired by using the pressure detection apparatuses 8, the acquired pressures are compared by the controller to control the opening or closing of the electric pressure reducing pilot valve 2, and finally the downstream pressures of the pipelines are adjusted to reach the expected values. The entire pressure adjustment process requires no manual operation, and the pressure data of the downstream pressure values of the pipelines is acquired and transmitted to an Internet-of-Things platform by the controller and is monitored in the Internet-of-Things platform by a central control or a mobile phone, thereby achieving digital monitoring. Moreover, the hydroelectric generator 7 converts the kinetic energy of the water flow into the electrical energy to meet power requirements of the electric pressure reducing pilot valve 2 and the pressure detection apparatuses 8, without the need for the external power supply, making this digital pressure reducing valve more applicable. The pressure reducing valve and the electric pressure reducing pilot valve 2 are conventional products in the industry. Their combined application to water pressure adjustment is also a conventional method in the industry. Therefore, the specific adjustment principles thereof are omitted herein.

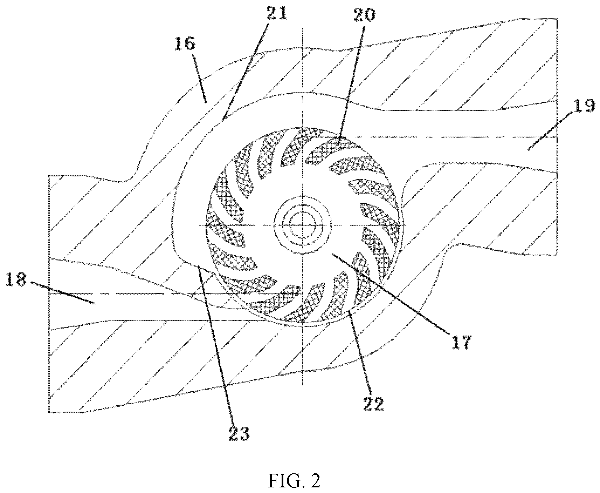

As shown in FIG. 2, the hydroelectric generator 7 includes an impeller chamber 17 formed in a pipeline 16 and a generator set arranged on one side of the impeller chamber 17, where the generator set includes a housing, and a stator and a rotor arranged in the housing, the rotor includes an impeller 20 and a rotating shaft arranged in the center of the impeller, a permanent magnet is arranged at one end of the impeller 20, blades are arranged at the other end of the impeller, the end provided with the permanent magnet corresponds to the stator, the end provided with the blades is arranged in the impeller chamber 17, and the blades rotate in the impeller chamber 17 to drive the rotor to rotate; the impeller chamber 17 is connected to a water inlet 18 and a water outlet 19 of the pipeline, and an inner wall of the impeller chamber 17 includes a large-radius arc 21 and a small-radius arc 22 which are concentric, and a connecting arc 23 that connects the two concentric arcs; and a cavity that accommodates a water flow is formed between the inner wall with the large-radius arc 21 of the impeller chamber 17 and the blades. When the water flow enters the impeller chamber 17 from the water inlet 18, the kinetic energy of the water flow drives the impeller 20 again to rotate, and meanwhile, the water flow filling the cavity drives the impeller 20 again to rotate during flowing. This greatly improves the utilization rate of the kinetic energy of the water flow, increases the rotational speed of the impeller 20, and ultimately increases the generating power.

In this embodiment, the flow detection apparatuses can also be arranged before and after the main valve 1 respectively. The flow detection apparatuses are connected to the controller. Flow data is acquired and transmitted by the controller to the Internet-of-Things platform and is monitored by the central control or the mobile phone, thereby achieving remote flow monitoring.

Embodiment 2

As shown in FIG. 1, the difference between this embodiment and Embodiment 1 is that a filter 9 is arranged on the first pipeline 3. The filter 9 filters impurities in water, thereby preventing the impurities from entering the electric pressure reducing pilot valve 2, and avoiding influencing pressure adjustment sensitivity or pressure adjustment failure of the electric pressure reducing pilot valve 2 due to the impurities. Meanwhile, a filter can also be arranged on the fifth pipeline 6 to filter the impurities in the water, thereby preventing the impurities from entering the hydroelectric generator 7 to affect power generation.

Specifically, a ball valve 10 can also be arranged on each of the first pipeline 3 and the second pipeline 4. The ball valve 10 is mainly configured to control opening or closing of the pipeline, and remains normally open in a working state. A gate valve 21 is arranged on the fifth pipeline 6. The gate valve 21 is mainly configured to adjust a flow rate of the generator to meet power consumption and generation requirements of the entire system in a working state.

An electric valve can also be arranged on the fourth pipeline 15. The electric valve is in communication connection with the controller and is controlled by the controller to be opened or closed. The electric valve is used to adjust the pressure of the lower diaphragm cavity. When the outlet pressure of the self-powered digital pressure reducing valve rises to a set range value, the controller acquires the pressure data, and the Internet-of-Things platform receives the pressure data detected by the pressure transmitters. When an upper pressure limit is exceeded, the Internet-of-Things platform sends an instruction to the controller to open the digital pressure reducing valve. When the pressure of the lower diaphragm cavity drops to the upper pressure limit, a valve plate assembly closes, thereby controlling the outlet pressure of the main valve to be stabilized.

Embodiment 3

The difference between this embodiment and Embodiment 1 is that the controller is in communication connection with a mobile phone APP. With this design, not only can the pipeline pressures be viewed on the mobile phone APP to achieve remote monitoring, but the expected pipeline pressure or the pipeline pressures in different time periods can also be set on the mobile phone APP to achieve remote adjustment. Specifically, the controller can also be in communication connection with a PC operation terminal, enabling remote control by operating the PC operation terminal.

Embodiment 4

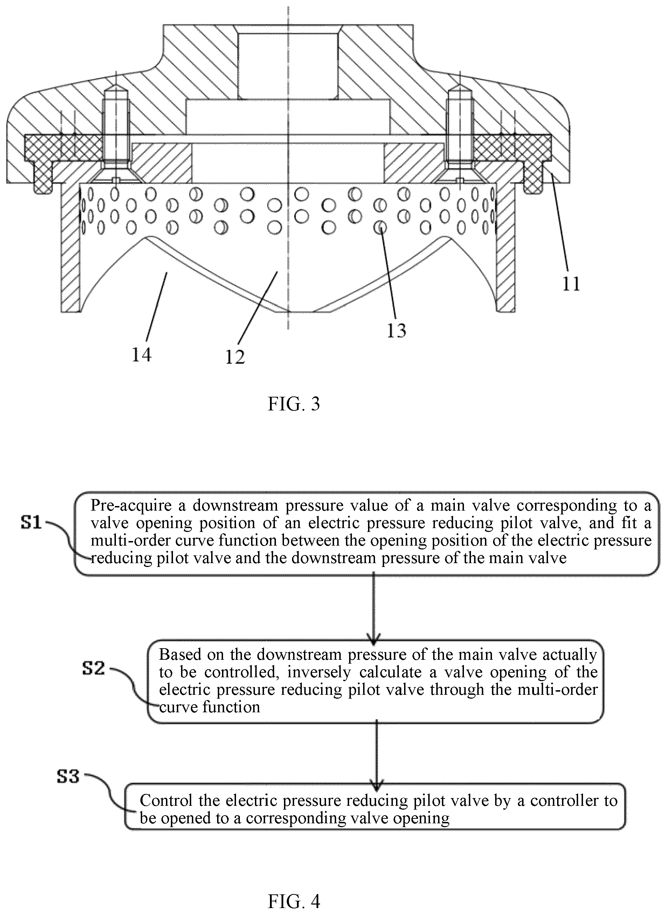

As shown in FIG. 3, the difference between this embodiment and Embodiment 1 is that a flow regulating sleeve on the valve plate assembly of the main valve 1 includes a cylindrical sleeve arranged at the bottom of a valve plate of the pressure reducing valve, where at least one circle of water inlet holes is formed in a side wall of the cylindrical sleeve near the valve plate, and at least one V-shaped groove is further formed in the side wall of the cylindrical sleeve; and the water inlet holes on the same circle are arranged symmetrically. Compared with the use of simple round holes as water inlet holes, the formation of the V-shaped grooves and the circularly arranged water inlet holes in the cylindrical sleeve greatly increases the water flow area, thus increasing the water flow rate of the valve. Meanwhile, the water inlet holes on the same circle are arranged symmetrically. When a high-pressure external water flow enters from the water inlet holes, water also enters the symmetrically arranged water inlet holes. The two water flows impact each other in the cylindrical sleeve, so that the water flows are prevented from impacting an inner wall of the cylindrical sleeve, thereby reducing cavitation.

Meanwhile, waterproof sealing rings can also be arranged at pipeline joints.

(The above description of Embodiment 4 should be carried out in conjunction with the reference numerals in FIG. 3)

Embodiment 5

A pressure adjustment method for rapidly adjusting a pressure of the self-powered digital pressure reducing valve is disclosed. The method specifically includes the following steps:

S1: pre-acquiring a downstream pressure value of the main valve corresponding to a valve opening position of the electric pressure reducing pilot valve to fit a multi-order curve function between the opening position of the electric pressure reducing pilot valve and a downstream pressure of the main valve;

S2: based on the downstream pressure of the main valve actually to be controlled, inversely calculating a valve opening of the electric pressure reducing pilot valve through the multi-order curve function; and

S3: controlling the electric pressure reducing pilot valve by the controller to be adjusted to a corresponding valve opening.

In the step S2, a calculation method for the multi-order curve function is as follows:

$$y(x, W) = w_0 + w_1 x + \cdots + w_m x^m = \sum_{i=0}^{m} w_i x^i$$

$$W = \begin{bmatrix} w_0 \\ w_1 \\ \vdots \\ w_m \end{bmatrix}, \quad X = \begin{bmatrix} 1 & x_1 & \cdots & x_1^m \\ 1 & x_2 & \cdots & x_2^m \\ \vdots & \vdots & \ddots & \vdots \\ 1 & x_n & \cdots & x_n^m \end{bmatrix}$$

where X is the downstream pressure, and $x_1$ - $x_1^m$ are measured downstream pressure values; W refers to all weight values obtained by testing, $w_0$-$w_m$ are weights, and $\sum_{i=0}^{m} w_i x^i$ is the opening position of the electric pressure reducing pilot valve.

The electric pressure reducing pilot valve is controlled to adjust the downstream pressure of the main valve. It takes a long time for the downstream pressure of the main valve to tend to be stable from the initial state, that is, the change of the downstream pressure is delayed. During operation, it is difficult to quickly adjust the electric pressure reducing pilot valve to the correct position.

In this embodiment, the downstream pressure value of the main valve corresponding to the valve opening position of the electric pressure reducing pilot valve is pre-acquired to fit the multi-order curve function between the opening position of the electric pressure reducing pilot valve and the downstream pressure of the main valve. When the downstream pressure needs to be adjusted, the opening position of the electric pressure reducing pilot valve can be directly adjusted and controlled to the corresponding opening position by inversely calculating the opening position of the electric pressure reducing pilot valve. After the pressure is ensured to be stable, the downstream pressure is at the expected value, thereby accurately adjusting the downstream pressure, and greatly shortening the pressure adjustment time.

Meanwhile, the coordinate graph with the valve opening position of the electric pressure reducing pilot valve as the abscissa and the downstream pressure of the main valve as the ordinate can also be generated based on the pre-acquired downstream pressure value of the main valve corresponding to the valve opening position of the electric pressure reducing pilot valve. By looking up a table, the valve opening of the electric pressure reducing pilot valve can be quickly adjusted. Specifically, when the valve is adjusted and controlled, the required downstream pressure of the main valve is first determined based on working conditions, a valve opening value corresponding to the required downstream pressure of the main valve is selected from the coordinate graph, and the valve opening is adjusted to the opening value, so that the downstream pressure of the main valve reaches the required pressure value.

The identical or similar reference numerals in the drawings correspond to the identical or similar components; and the positional relationships depicted in the drawings are for exemplary illustration only and should not be construed as limiting this patent. Apparently, the above embodiments of the present disclosure are only examples provided to clearly illustrate the present disclosure, and are not limitations on the implementations of the present disclosure. For those of ordinary skill in the art, various other forms of modifications or changes can be made on the basis of the above description. It is neither necessary nor possible to enumerate all embodiments herein. Any modifications, equivalent replacements, improvements, etc. made within the spirit and principle of the present disclosure shall be included within the scope of protection of the claims of the present disclosure.

**Claims**

1.    A self-powered digital pressure reducing valve, comprising a main valve, **characterized in that**, the self-powered digital pressure reducing valve comprises an electric pressure reducing pilot valve, wherein a water inlet of the electric pressure reducing pilot valve is connected to a water inlet end of the main valve via a first pipeline, a water outlet end of the main valve is connected to a water outlet of the electric pressure reducing pilot valve via a second pipeline, the water outlet of the electric pressure reducing pilot valve is connected to an upper diaphragm cavity in a control chamber of the main valve via a third pipeline, a lower diaphragm cavity of the main valve is connected to the outside via a fourth pipeline, a fifth pipeline is further connected between the water inlet end and the water outlet end of the main valve, and a hydroelectric generator is arranged on the fifth pipeline; and pressure detection apparatuses arranged before and after the main valve, and a controller that receives detection signals from the pressure detection apparatuses to control opening and closing of the electric pressure reducing pilot valve, the hydroelectric generator is connected to the pressure detection apparatuses and the electric pressure reducing pilot valve.

2. The self-powered digital pressure reducing valve according to claim 1, wherein a filter is arranged on each of the first pipeline and the fifth pipeline.

3. The self-powered digital pressure reducing valve according to claim 1, wherein a ball valve is arranged on each of the first pipeline and the second pipeline, and a gate valve is arranged on the fifth pipeline.

4. The self-powered digital pressure reducing valve according to claim 1, wherein an electric valve and an automatic exhaust valve are arranged on the fourth pipeline.

5. The self-powered digital pressure reducing valve according to claim 1, wherein the controller is in communication connection with a mobile phone APP; and the controller is further in communication connection with a PC operation terminal.

6. The self-powered digital pressure reducing valve according to claim 1, wherein circular water inlet holes and a V-shaped groove water inlet are formed in a flow regulating sleeve of a valve plate assembly of the main valve.

7. The self-powered digital pressure reducing valve according to claim 1, wherein the hydroelectric generator comprises an impeller chamber formed in a pipeline and a generator set arranged on one side of the impeller chamber, the generator set comprises a housing, and a stator and a rotor arranged in the housing, the rotor comprises an impeller and a rotating shaft arranged in a center of the impeller, a permanent magnet is arranged at one end of the impeller, blades are arranged at an other end of the impeller, the end provided with the permanent magnet corresponds to the stator, the end provided with the blades is arranged in the impeller chamber, and the blades rotate in the impeller chamber to drive the rotor to rotate; the impeller chamber is connected to a water inlet and a water outlet of the pipeline, and an inner wall of the impeller chamber comprises two concentric arcs with different radii and a connecting arc that connects the two concentric arcs; and a cavity that accommodates a water flow is formed between the inner wall with a large-radius arc of the impeller chamber and the blades.

8. A pressure adjustment method for rapidly adjusting a pressure of the self-powered digital pressure reducing valve according to any one of claims 1 to 7, the method specifically comprising the following steps:

    S1: pre-acquiring a downstream pressure value of the main valve corresponding to a valve opening position of the electric pressure reducing pilot valve to fit a multi-order curve function between the opening position of the electric pressure reducing pilot valve and a downstream pressure of the main valve;
    S2: based on the downstream pressure of the main valve actually to be controlled, inversely calculating a valve opening of the electric pressure reducing pilot valve through the multi-order curve function; and
    S3: controlling the electric pressure reducing pilot valve by the controller to be adjusted to a corresponding valve opening, so as to ensure that the downstream pressure of the main valve is at an expected value.

9. The pressure adjustment method for the self-powered digital pressure reducing valve according to claim 8, wherein in the step S2, a calculation method for the multi-order curve function is as follows:

$$y(x, W) = w_0 + w_1 x + \cdots + w_m x^m = \sum_{i=0}^{m} w_i x^i$$

$$W = \begin{bmatrix} w_0 \\ w_1 \\ \vdots \\ w_m \end{bmatrix}, \quad X = \begin{bmatrix} 1 & x_1 & \cdots & x_1^m \\ 1 & x_2 & \cdots & x_2^m \\ \vdots & \vdots & \ddots & \vdots \\ 1 & x_n & \cdots & x_n^m \end{bmatrix}$$

wherein X is the downstream pressure, and $x_1$ - $x_1^m$ are measured downstream pressure values; W refers to all weight values obtained by testing, $w_0$-$w_m$ are weights, and $\sum_{i=0}^{m} w_i x^i$ is the opening position of the electric pressure reducing pilot valve.

10. The pressure adjustment method for the self-powered digital pressure reducing valve according to claim 9, wherein the step S2 further comprises: generating a coordinate graph with the valve opening position of the electric pressure reducing pilot valve as an abscissa and the downstream pressure of the main valve as an ordinate based on the pre-acquired downstream pressure value of the main valve corresponding to the valve opening position of the electric pressure reducing pilot valve in the step S1.

Mobile phone
APP

Central
control

Internet-of-Thi
ngs platform

Cont-
roller

FIG. 1

FIG. 2

FIG. 3

FIG. 4

## INTERNATIONAL SEARCH REPORT

| International application No. |
| --- |
| **PCT/CN2024/135735** |

**A. CLASSIFICATION OF SUBJECT MATTER**

F16K17/32(2006.01)i

According to International Patent Classification (IPC) or to both national classification and IPC

**B. FIELDS SEARCHED**

Minimum documentation searched (classification system followed by classification symbols)

IPC: F16K

Documentation searched other than minimum documentation to the extent that such documents are included in the fields searched

Electronic data base consulted during the international search (name of data base and, where practicable, search terms used)

CNABS, CNTXT, ENTXTC, WPABS, CNKI: 先导阀, 自压力, 膜片, 隔膜, 水力发电, 叶轮, 腔室, 压力传感器, pilot, priority, diaphragm, mebrane, hydroelectric, hydraulic, generator, impeller, sensor

**C. DOCUMENTS CONSIDERED TO BE RELEVANT**

| Category* | Citation of document, with indication, where appropriate, of the relevant passages | Relevant to claim No. |
| --- | --- | --- |
| X | CN 220749150 U (ZHUZHOU ZHUHUA SMART WATER TECHNOLOGY CO., LTD. et al.) 09 April 2024 (2024-04-09) description, paragraphs [0025]-[0048], and figures 1-3 | 1-6 |
| Y | CN 220749150 U (ZHUZHOU ZHUHUA SMART WATER TECHNOLOGY CO., LTD. et al.) 09 April 2024 (2024-04-09) description, paragraphs [0025]-[0048], and figures 1-3 | 7 |
| Y | CN 204004749 U (RUNNER (XIAMEN) INDUSTRY CORP.) 10 December 2014 (2014-12-10) description, paragraphs [0014]-[0021], and figures 1-2 | 7 |
| A | CN 106949286 A (ZHEJIANG UNIVERSITY) 14 July 2017 (2017-07-14) entire document | 1-10 |
| A | CN 112459948 A (SEASON FARM BIOLOGICAL ELECTROMECHANICAL CO., LTD.) 09 March 2021 (2021-03-09) entire document | 1-10 |
| A | GB 0711413 D0 (AQUAVENT UK LTD.) 25 July 2007 (2007-07-25) entire document | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 June 2025** | **16 June 2025** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/135735**

| Patent document cited in search report | | | Publication date (day/month/year) | Patent family member(s) | | | Publication date (day/month/year) |
|---|---|---|---|---|---|---|---|
| CN | 220749150 | U | 09 April 2024 | None | | | |
| CN | 204004749 | U | 10 December 2014 | None | | | |
| CN | 106949286 | A | 14 July 2017 | None | | | |
| CN | 112459948 | A | 09 March 2021 | None | | | |
| GB | 0711413 | D0 | 25 July 2007 | AU | 2008263589 | A1 | 18 December 2008 |
| | | | | WO | 2008152427 | A2 | 18 December 2008 |
| | | | | WO | 2008152427 | A3 | 05 February 2009 |
| | | | | GB | 2450125 | A | 17 December 2008 |
| | | | | EP | 2162814 | A2 | 17 March 2010 |
| | | | | US | 2011297252 | A1 | 08 December 2011 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200520050625